# EUROPÄISCHE PATENTSCHRIFT

(11) **EP 1 243 356 B1**
(45) Veröffentlichungstag und Bekanntmachung des Hinweises auf die Patenterteilung: **12.05.2004**
(21) Anmeldenummer: 02006168.5
(22) Anmeldetag: 19.03.2002
(51) Int. Cl.: B21D 37/20, B23P 15/24, B29C 67/00

(54) **Verfahren zur Herstellung von Formkörpern**
Method of making moulded bodies
Procédé de fabrication de corps moulés

(30) Priorität: 20.03.2001 DE 10113419
(43) Veröffentlichungstag der Anmeldung: 25.09.2002
(73) Patentinhaber: IMIG International Management and Innovation Group AG, 39179 Barleben (DE)
(72) Erfinder: Hartmann, Matthias, Dr., 71229 Leonberg (DE); Linzen, Thomas, 39167 Irxleben (DE)
(74) Vertreter: Leinung, Günter

(56) Entgegenhaltungen:
- EP-A- 0 775 550
- DE-A- 19 900 597
- DE-C- 19 701 078
- US-A- 5 730 817

## Beschreibung

Die Erfindung bezieht sich auf ein Verfahren zur Herstellung von Formkörpern, vorzugsweise von nach dem LOM - Verfahren (Laminatet Object Manufactoring) hergestellten Formkörpern, welche als Urformmodelle bzw. als Abformmodelle für die verschiedenen Anwendungsfälle zum Einsatz kommen, so beispielsweise als Blechumformwerkzeuge, nach dem Oberbegriff des Anspruchs 1.

Das LOM - Verfahren gehörte zu der großen Verfahrensgruppe, den Rapid-Prototyping-Verfahren, mit denen schichtweise körperliche Prototypen unmittelbar aus dreidimensionalen CAD - Datenmodellen aufgebaut werden. Neben dem LOM - Verfahren wird auch das selektive Lasersintern (SLS) dem Rapid-Prototyping-Verfahren zugeordnet.
Bei der Herausbildung von Formkörpern nach dem LOM - Verfahren, werden schichtenweise feste, von einer Rolle abzuwickelnde Materialien wie Papier oder Kunststoffolien, die auf der Unterseite mit einem Kleber versehen sind mittels Druck und Hitze aufeinander verklebt. Die Ausbildung der Konturen werden durch Schneidvorgänge erzielt. Zum Einsatz kommen Laser, die das Material jeweils pro Schicht an den vorgesehenen Schnittverläufen schneiden.
Das LOM - Verfahren wird vorzugsweise im Modell- und Prototypenbau eingesetzt, und die nach diesem Verfahren hergestellten Formkörper werden als Anschauungsmodelle oder als sogenannte Negativformkörper, die als Abformmodelle oder Urformmodelle zum Einsatz kommen, verwendet. So auch als Blechumformungswerkzeug, wie mit der DE 199 00 597 A1 bekannt geworden.
Bei diesem Verfahren zur Herstellung von Blechumformungswerkzeugen werden, ausgehend von einem dreidimensionalen Volumenmodell des Blechumformungswerkzeuges die dreidimensionalen Koordinaten der Modelloberfläche erzeugt, das Volumenmodell wird in Schichten zerlegt und für die Volumenelemente unter Verwendung der dreidimensionalen Koordinaten der Modelloberfläche werden die jeweiligen Konturkoordinaten bestimmt.
Dabei werden entweder Schichten aus Papier und / oder Kunststoffolien nacheinander übereinander geklebt und jeweils die den Volumenelementen entsprechenden Schichten mittels eines Lasers geschnitten.

Zur Erhöhung der Kompressibilität derart hergestellter Formkörper wird ausgeführt, dass dies beispielsweise durch Tränken und / oder Infiltrieren des Formkörpers, hier des Werkzeugkörper, mit flüssigen chemischen Substanzen, wie Harzen oder dergleichen erfolgt, die in den Werkzeugkörper eindringen und dann aushärten.
Es wird dann ausgeführt, dass bei nach dem Laminierverfahren hergestellten Werkzeugkörper die zum Einsatz kommende chemische Substanz nicht den Werkzeugkörper vollständig durchdringt, sondern sie wird nur einige Millimeter in das Werkzeug eindringen, so dass sich eine Randzonenverfestigung bilden soll.
Es wird dann ferner ausgeführt, dass die Oberfläche des gebildeten Blechumformwerkzeuges durch Schleifen, Schmirgeln, Polieren oder sonstige Oberflächenbearbeitung geglättet werden kann, was durch Grundieren, Infiltrieren, Lackieren und / oder dergleichen erfolgen soll, wobei ausdrücklich ausgeführt wird, dass die zum Einsatz kommenden Mittel und Verfahrensschritte ein Schließen der Poren an der Oberfläche des Blechumformungswerkzeuges bewirken sollen, im weitesten Sinne ein Glätten.

Dieser Methode des Verschließens der Poren an den Oberflächen von nach dem LOM - Verfahren hergestellten Formkörpern haftet nach wie vor der Nachteil an, dass auch nach dem Versiegeln der Oberfläche die Formkörper im Inneren ein offenes Porenvolumen besitzen, so dass sie bei ihrem bestimmungsgemäßen Einsatz sich unter Druck verformen, wodurch die Verwendung derart hergestellter Formkörper sehr begrenzt ist.

Es ist Aufgabe der vorliegenden Erfindung, ein Verfahren zur Herstellung von Formkörpern zu entwickeln, mit dem die Grundfestigkeit von hergestellten LOM - Formkörpern erhöht wird, eine Verringerung der Kompressibilität unter Druckbeanspruchung erreicht werden soll, dies bei Verbesserung der mechanischen Eigenschaften.

Erfindungsgemäß wird die Aufgabe mit den Merkmalen des Anspruchs 1 gelöst.

Bevorzugte Ausführungen und vorteilhafte Lösungen ergeben sich aus den Unteransprüchen.

So wurde ein Verfahren zur Herstellung von Formkörpern, speziell von LOM-Papierformkörpern geschaffen, welche nach ihrer Herstellung zur Erhöhung ihrer Druckfestigkeiten und damit verbunden der Verringerung der Kompressibilität bei Druckbeanspruchungen, in weiteren technologischen Verfahrensschritten zu einem Formkörper herausgebildet werden, deren mechanischen Eigenschaften gegenüber herkömmlich hergestellten LOM - Formkörpern wesentlich höher liegen, so dass diese Formkörper direkt als Werkzeugumformelemente, beispielsweise für die Blechumformung direkt eingesetzt werden können, wobei ein weiteres Einsatzgebiet in der Gießereitechnik liegt, in dem so hergestellte Formkörper als Abformmodelle direkt aus den Konstruktionsdaten mit ausreichender Standzeit auch für größere Abformmengen hergestellt und eingesetzt werden können.

Diese Verbesserungen werden durch die Verfahrensschritte der Trocknung, eines Infiltrierens und eines nachfolgenden Härtevorganges erreicht.
Bei der Verfahrensstufe der Trocknung handelt es sich um eine Vorbehandlung der gefertigten Formkörper, die bei 75° Celsius abläuft und vorzugsweise die zu trocknenden Formkörper dazu in einen Trockenofen verbracht werden.

Nach dem Trocknungsvorgang werden die Formkörper bis auf ca. 60° Celsius abgekühlt bevor sich die Verfahrensstufe des Infiltrierens anschließt. Die Vorgänge des Trocknens und des sich anschließenden Abkühlens laufen in geregelten Prozessstufen ab, so dass keine unnötigen bzw. zusätzlichen Spannungen in den Formkörpern auftreten können, die zu Rissen zwischen den einzelnen Laminatschichten des Formkörpers führen könnten, wodurch seine Qualität und somit sein weiterer Verwendungszweck sehr eingeschränkt wäre.

Der nächste Verfahrensschritt des Infiltrierens der Formkörper erfolgt unter Vakuum wobei die zu behandelnden Formkörper so in den Infiltrationsbehälter eingesetzt werden, dass ihre Laminatschichten senkrecht ausgerichtet sind.
Dies ist für den Infiltrationsvorgang sehr positiv, da die Formkörper bei ihrer Herstellung mit sogenannten Durchgangslöchern geringster Größe ausgebildet werden, welche 90° versetzt zu den Schichten im jeweiligen Formkörper verlaufen.
Die Herausbildung dieser Durchgangslöcher wird erreicht, indem beispielsweise ein Laser über jede aufgelegte Schicht hinweg gleitet, dabei die Oberfläche weitestgehend anritzt, wodurch die Durchgangslöcher in dem jeweiligen Formkörper herausgebildet werden.

Nach dem Infiltrieren werden die zu behandelnden Formkörper in einen Härteofen verbracht, mit einem Härter behandelt und bei Temperaturen von bis zu 90° Celsius ausgehärtet.

Diese technologischen Verfahrensschritte laufen in kontinuierlicher Folge in Form einer geschlossenen Kette ab, so dass diese Prozesse zur Herstellung der LOM - Formkörper nicht durch äußere Einflüsse beeinträchtigt werden.

Beste Ergebnisse werden erreicht, wenn Infiltrationsmittel verwendet werden, die auf Epoxidharzbasis hergestellt sind. Gleichzeitig sollten die Infiltrationsmittel sehr niedrigviskos und lösmittelfrei sein. So haben sich hinsichtlich möglichst hoher mechanischer Eigenschaften sowohl Amin- als auch Säureanhydridhärter bewährt.
Gegenüber den Aminhärtern haben die Anhydridhärter die Vorteile, dass sie eine längere Lebensdauer besitzen und wiederverwendbar sind. Sie sind völlig frei von Lösungsmitteln, ihre notwendige Härtetemperatur ist niedriger und die erzielbaren mechanischen Endwerte werden unmittelbar nach der thermisch beschleunigten Härtung erreicht.

Dem gegenüber besitzen derartige Infiltrationsmittel den Nachteil, dass sie gegen Feuchtigkeit sehr empfindlich sind, dass heißt die Stoffe müssen in gut geschlossenen Behältern aufbewahrt werden und vor der Infiltration ist unbedingt eine zusätzliche Trocknung der zu behandelnden Formkörper erforderlich. Die Auswahl hinsichtlich des zum Einsatz kommenden Infiltrationsmittel wird somit abhängig sein vom hergestellten Formkörper als auch von seinem weiteren Einsatzgebiet.

Durch eine optimale Abstimmung des Infiltrats mit dem Ausgangswerkstoff, dem LOM - Papier, und der zur maximalen Aushüllung des offenen Porenvolumens optimierten Prozesskette, kommen die Vorteile der LOM - Formkörper hinsichtlich der Belastungssteigerungen gegenüber bisher bekannten Modellen zum Ausdruck. So wird eine Belastungssteigerung um 50 Prozent senkrecht zur Baulage und sogar um 175 Prozent in Baurichtungslage erzielt.

Damit sind die Voraussetzungen geschaffen worden, direkt Werkzeugformelemente für die Blechumformung herzustellen, deren Fertigungsgenauigkeiten gegenüber Stahlwerkzeugen im Bereich von -0,1 bis -0,3 mm bei bis zu 1 mm dicken Stahlblechen liegen.

Mit nachfolgendem Ausführungsbeispiel soll die Erfindung näher erläutert werden.

Die Vorbehandlung der Formkörper beinhaltet im wesentlichen das Entfernen der von der jeweiligen Umgebungsbedingung abhängigen Gleichgewichtsfeuchte aus dem hergestellten Formkörper durch einen Trockenvorgang. Das Trocknen erfolgt durch ein stufenweises Erwärmen bis auf ca. 75° Celsius und des Haltens dieser Temperatur und findet in einem programmierbaren Wärmeschrank statt. Die Haltezeiten der Trockentemperatur sind dabei abhängig von der Masse bzw. den Abmaßen des Formkörpers, die wertmäßig in die Steuer- und Regelungssystematik des Wärmeschrankes Einfluss finden.
Mit diesem Trocknungsvorgang der Formkörper erhöht sich deren Aufnahmefähigkeit von Filtrationsmitteln.
Nach dem Trocknungsvorgang ist eine Abkühlung bis auf ca. 60° Celsius notwendig, bevor die Formkörper zur nächsten Verfahrensstufe, des Infiltrierens, weitergeleitet werden. Die Abkühlung erfolgt stufenweise, um unnötige Spannungen in den Formkörpern zu verhindern.

Die aus dem Wärmeschrank entnommenen Formkörper werden nun in einen Vakuumbehälter überführt, der gleichzeitig mit einer Infiltriereinrichtung versehen ist, die wiederum mit einem Infiltrierbehälter, welcher sich außerhalb des Vakuumbehälters befindet, verbunden ist.
Ist der jeweilige Formkörper in den Vakuumbehälter verbracht worden, wird dieser nun bis auf einen Druck von 40 mbar evakuiert und für die Dauer des Infiltrierens gehalten. Die Dauer der Evakuierung ist dabei abhängig von der Formkörpermasse und wird über die Masseveränderung des Formkörpers kontrolliert.
Das Infiltrieren unter Vakuum wird durch Zulauf des Infiltrationsmittels aus dem gesonderten absperrbaren Infiltrationsbehälter vorgenommen, dieser wurde vor Beginn der Infiltration mit dem erforderlichen Infiltrationsmittel-Volumen gefüllt, und der Vakuumbehälter und der Infiltrationsmittelbehälter sind über einen Druckausgleich verbunden. Damit ist das Tränken, das Infiltrieren, ohne zwischenzeitliches Einbrechen des Vakuums möglich und vorteilhafter Weise erfolgt die Zuführung des Infiltrationsmittels in den Infiltrierbehälter über Eintrittsöffnungen im Bodenbereich des Infiltrierbehälters, so dass das Infiltrationsmittel von unten nach oben in und durch den jeweiligen Formkörper aufsteigt, somit längs der Schichtung der Formkörper. Dabei erfolgt ein Verdrängen von gegebenenfalls noch vorhandener Restluft aus dem Formkörper, so dass eine vollständige Füllung des Formkörpers mit dem Infiltrationsmittel gewährleistet wird. Das Durchlaufen der Formkörper längs ihrer Schichtung wird dadurch erreicht, dass die Formkörper so in den Behälter verbracht werden, dass die Laminatschichten senkrecht nach oben zeigen, was sich auch vorteilhaft auf die Entlüftung des zu infiltrierenden Formkörpers auswirkt. Die einzelnen Öffnungen in dem Formkörper sind durch das Einbringen eines quadratischen Lochmusters von ca. 0,8 mm Bohrungen im Abstand von ca. 10 mm, senkrecht zur Laminatrichtung vorgesehen, die den Vorgang des Infiltrierens wesentlich verkürzen. Die Dauer des Infiltrierens ist abhängig von der Dichte und Größe der Formkörper und wird beendet, wenn keine Luftbläschen mehr aus dem Formkörper aufsteigen, so dass die Sicherheit gegeben ist, dass der jeweilige Formkörper bis mindestens 98 Prozent mit dem jeweiligen Infiltriermittel infiltriert ist.

Der nachfolgende Härtevorgang erfolgt nach einem vorbestimmten Temperatur-Zeit-Regime und findet vorzugsweise in einem programmierbaren Wärmeschrank statt. Wesentlich ist, dass die Härtetemperaturen in dem Bereich zwischen 70° bis 90° Celsius liegen und zur Vermeidung von mechanischen Spannungen in dem Formkörper die Aufheizung und Abkühlung wiederum geregelt vorgenommen wird.
Als Härtemittel kommen sowohl Amin- als auch anhydridhärtende Mittel zum Einsatz, was wiederum abhängig ist vom hergestellten Formkörper, insbesondere von der Verwendung des Papiers, mit denen die einzelnen Laminatschichten des Formkörpers herausgebildet werden.
Von besonderer Bedeutung bei der Herstellung der LOM - Formkörpern ist, dass beim Herstellungsprozess die einzubringenden Löcher immer unter einem Winkel von 90° versetzt zur jeweiligen Laminatschicht verlaufen. Dies bedeutet, die Löcher werden senkrecht zur jeweiligen Baurichtung des Formkörpers herausgebildet und verlaufen somit senkrecht zur jeweiligen Laminatschicht.

## Patentansprüche

1. Verfahren zur Herstellung von Formkörpern, die nach dem LOM - Verfahren hergestellt und als Abformmodelle oder Urformmodelle zum Einsatz kommen, wobei Schichten aus Papier nacheinander übereinander geklebt sowie jeweils die den Volumenelementen entsprechenden Schichten mittels eines Schneidwerkzeuges geschnitten und deren Oberflächen durch Infiltrieren versiegelt werden, dadurch gekennenzeichnet, daß die LOM - Körper aus Papier nach ihrer Fertigstellung einer Vorbehandlung in Form eine Trocknung bei Temperaturen bis auf 75° Celsius erfahren, sich das Infiltrieren des jeweils gesamten LOM - Formkörpers unter Vakuum anschließt und nachfolgend die infiltrierten LOM - Formkörper bei Temperaturen bis zu 90° Celsius ausgehärtet werden, wobei das Trocknen, Infiltrieren und Härten in einer geschlossenen Kette abläuft und die LOM - Formkörper bis zu 98 Prozent mit dem Infiltrationsmittel infiltriert sind.

2. Verfahren nach Anspruch 1, **dadurch gekennzeichnet, dass**
die Trocknung in einem programmierbaren Wärmeschrank, das Infiltrieren unter Vakuum bei Zulauf von Infiltrationsmitteln in einem Vakuumbehälter und das Härten nach einem bestimmten Temperatur-Zeit-Regime in einem programmierbaren Wärmeschrank ablaufen.

3. Verfahren nach den Ansprüchen 1 und 2, **dadurch gekennzeichnet, dass**
die Dauer der Evakuierung in Abhängigkeit von der Masse des jeweiligen LOM - Formkörpers und über die Masseänderung kontrolliert abläuft.

4. Verfahren nach einem der Ansprüche 1 bis 3, **dadurch gekennzeichnet, dass**
für das Infiltrieren auf Epoxidharzbasis hergestellte Infiltrationsmittel zum Einsatz kommen.

5. Verfahren nach einem der Ansprüche 1 bis 4, **dadurch gekennzeichnet, dass**
das Infiltrieren in dem Vakuumbehälter abläuft, in dem der Druck bis auf mindestens 40 mbar evakuiert und über den Zeitraum des Infiltrierens gehalten wird.

6. Verfahren nach einem der Ansprüche 1 bis 5, **dadurch gekennzeichnet, dass**
in Abhängigkeit vom Einsatzfall und Ausgestaltung der LOM - Formkörper Aminhärter oder Anhydridhärter zum Einsatz kommen.

7. Verfahren nach einem der Ansprüche 1 bis 6, **dadurch gekennzeichnet, dass**
die Erwärmung und Abkühlung der zu trocknenden und zu härtenden LOM - Formkörper nach einem bestimmten Temperatur-Zeit-Regime erfolgt und die Härtetemperaturen im Bereich zwischen 70° bis 90° Celsius liegen.

8. Verfahren nach einem der Ansprüche 1 bis 7, **dadurch gekennzeichnet, dass**
die LOM - Formkörper mit Löchern ausgebildet sind, die ein quadratisches Lochmuster von 0,8 mm Bohrungen im Abstand von 10 mm ergeben, welches senkrecht zur Laminatrichtung in den Formkörpern vorgesehen sind, wobei diese Löcher um 90° versetzt zur Baurichtung der Schichten der LOM - Formkörper verlaufen.

## Claims

1. Procedure for the preparation of moulds in accordance with the LOM procedure and which are used as casting or prototype models, where layers of paper are consecutively stuck on top of each other and the layers corresponding to the volume elements are cut with a cutting tool and the surfaces of the layers are sealed by infiltration, with the characteristics that the LOM bodies are submitted to pre-treatment by drying at 75° Centigrade after preparation, followed by infiltration of the total LOM mould under vacuum and hardening of the infiltrated LOM mould at temperatures of up to 90° Centigrade, where the drying, infiltration and hardening take place in closed sequence and the LOM moulds are infiltrated with the infiltration medium by up to 98%.

2. Procedure according to claim 1, with the characteristics that the drying is performed in a programmable heating cabinet, the infiltration is performed under vacuum in a vacuum container with addition of infiltration medium and the hardening is performed in a programmable heating cabinet according to a defined temperature time table.

3. Procedure according to claims 1 and 2 with the characteristics that the duration of the evacuation depends on the weight of each LOM mould and on changes in weight.

4. Procedure according to claims 1 to 3 with the characteristics that the infiltration employs infiltration media based on epoxide resinates.

5. Procedure according to claims 1 to 4 with the characteristics that the infiltration occurs in the vacuum container in which the pressure is evacuated to at least 40 mbar, which is maintained for the duration of the infiltration.

6. Procedure according to claims 1 to 5 with the characteristics that amine hardener or anhydride hardener are used, depending on the individual case and the structure of the LOM moulds.

7. Procedure according to claims 1 to 6, with the characteristics that the warming and cooling of the LOM moulds which are to be dried and hardened is carried out according to a defined temperature time table and that the hardening temperatures lie in the range of 70° to 90° Centigrade.

8. Procedure according to claims 1 to 7 with the characteristics that the LOM moulds are supplied with holes which give a square pattern of holes of 0.8 mm at 10 mm apart, which are directed vertically to the direction of the laminate in the mould, where the direction of these holes is displaced by 90° relative to the direction of construction of the layers of the LOM moulds.

## Revendications

1. Procédé permettant de produire des corps moulés qui sont fabriqués selon le procédé LOM et qui sont utilisés comme modèles moulés ou modèles prototypes, moyennant quoi les couches de papier sont collées successivement les unes au-dessus des autres, les couches correspondant aux éléments de volume sont découpées au moyen d'un outil de coupe et dont les surfaces sont scellées par une infiltration, **caractérisé par le fait que**
les corps de papier LOM sont soumis, après leur réalisation, à un traitement préalable qui se présente sous forme de séchage à des températures pouvant atteindre 75° Celsius, l'infiltration du corps moulé intégral LOM s'effectue sous vide et les corps moulés LOM infiltrés sont ensuite durcis à des températures pouvant atteindre 90° Celsius, le séchage, l'infiltration et le durcissement intervenant dans une chaîne fermée et les corps moulés LOM étant infiltrés jusqu'à 98% avec l'agent infiltrant.

2. Procédé selon la revendication 1, **caractérisé par le fait que**
le séchage intervient dans une armoire chauffante programmable, l'infiltration sous vide est réalisée lors de l'introduction d'agents infiltrants dans un bassin à vide et le durcissement s'effectue dans une armoire chauffante programmable selon un régime température-temps bien défini.

3. Procédé selon les revendications 1 et 2, **caractérisé par le fait que**
la durée de l'évacuation dépend de la masse du corps moulé LOM correspondant et intervient de façon contrôlée au-delà du changement de masse.

4. Procédé selon l'une des revendications 1 à 3, **caractérisé par le fait que**
des agents infiltrants fabriqués à base de résine époxydique sont utilisés pour l'infiltration.

5. Procédé selon l'une des revendications 1 à 4, **caractérisé par le fait que**
l'infiltration s'effectue dans le bassin à vide, dans lequel la pression est évacuée jusqu'à 40 mbars minimum et est maintenue au-delà de la durée d'infiltration.

6. Procédé selon l'une des revendications 1 à 5, **caractérisé par le fait que**
des durcisseurs amines ou anhydrides sont utilisés en fonction du cas d'utilisation et de la conception des corps moulés LOM.

7. Procédé selon l'une des revendications 1 à 6, **caractérisé par le fait que**
le réchauffement et le refroidissement des corps moulés LOM qui doivent être séchés et durcis s'effectuent selon un régime température-temps bien défini et les températures de durcissement se situent entre 70° et 90° Celsius.

8. Procédé selon l'une des revendications 1 à 7, **caractérisé par le fait que**
les corps moulés LOM sont conçus avec des trous, donnant ainsi un modèle quadratique de trous de 0,8 mm situés à un intervalle de 10 mm, lesquels sont prévus verticalement par rapport au sens du stratifié dans les corps moulés, ces trous étant décalés de 90° par rapport au sens de conception des couches des corps moulés LOM.
